# EUROPEAN PATENT APPLICATION

(11) **EP 3 261 031 A1**
(43) Date of publication of application: **27.12.2017**
(21) Application number: 17176729.6
(22) Date of filing: 19.06.2017
(51) Int. Cl.: G06Q 10/06

(54) **RESIDENTIAL WASTE MANAGEMENT SYSTEM HAVING CONSUMPTION-BASED SERVICE PREDICTION**

(30) Priority: 20.06.2016 US 201662352391 P
(71) Applicant: Rubicon Global Holdings, LLC, Atlanta, GA 30328 (US)
(72) Inventor: RODONI, Philip, Georgia, Atlanta 30030 (US)
(74) Representative: Finnegan Europe LLP

(57) **Abstract**

A management system is disclosed for use with a vehicle configured to receive waste from a residential receptacle. The management system may have a source of customer consumption data, a communication device, and a controller in communication with the source and the communication device. The controller may be configured to utilize a correlation stored in memory to anticipate a service need of the residential receptacle based on the customer consumption data and information known about the residential receptacle. The controller may also be configured to selectively dispatch the vehicle via the communication device and based on the service need.

## Description

### Technical Field

The present disclosure relates generally to a management system and, more particularly, to a residential waste management system having consumption-based service prediction.

### Background

Conventional waste removal companies employ fleets of vehicles to retrieve waste from residential locations (e.g., from a house, a townhome, a duplex, an apartment, or an apartment building) having contracts with the company. The vehicles are dispatched to retrieve the waste on a regularly scheduled basis. In some instances, when the vehicles are dispatched to retrieve the waste, the corresponding waste receptacles are less than full. In other instances, the waste receptacles are overflowing by the time the vehicles are dispatched. In each of these instances, the customer may be less than satisfied with the provided service.

One attempt to address the above-described problems is disclosed in U.S. Patent No. 7,406,402 ("the '402 patent"). Specifically, the '402 patent discloses a system for scheduling the emptying of a waste container. The system includes a remote status unit coupled with a pressure transducer of an associated compacting ram, and a central unit. Each time material in the waste container is compacted by the compacting ram, the remote unit communicates information about the event (e.g., a frequency and/or force of the compacting) to the central unit. Based on the compacting information, the central unit determines a fullness of the waste container. Based on a history of the fullness information communicated by the remote unit to the central unit over a period of time, the central unit also predicts when the waste container will become completely full. The central unit then considers customer preferences (e.g., desired pick up times, pick up days, and desired container fullness) and limitations of waste haulers (e.g., number of drivers and trucks, shift structure, driver hours, dispatch hours, lead time, and landfill requirements), when selecting a latest time for dispatching a vehicle to empty the waste container that satisfies both the customer preferences and the waste hauler limitations.

Although the system of the '402 patent may help to avoid premature or delayed waste retrieval, it may also be problematic and lack applicability. In particular, every bin serviced by the system of the '402 patent requires a dedicated pressure transducer and remote unit. This large number of pressure transducers and remote units may be expensive to procure and difficult to maintain. In addition, the system may not be applicable to residential customers and/or consider a sufficient set of factors that may affect the fill rate of residential waste receptacles (e.g., receptacles that do not have compacting rams).

The disclosed system is directed to overcoming one or more of the problems set forth above and/or other problems of the prior art.

### Summary

In one aspect, the present disclosure is directed to a management system for use with a vehicle configured to receive waste from a residential receptacle. The management system may include a source of customer consumption data, a communication device, and a controller in communication with the source and the communication device. The controller may be configured to utilize a correlation stored in memory to anticipate a service need of the residential receptacle based on the customer consumption data and information known about the residential receptacle. The controller may also be configured to selectively dispatch a vehicle via the communication device and based on the service need.

In another aspect, the present disclosure is directed to a method of managing waste. The method may include receiving customer consumption data, and anticipating a need to service a residential receptacle based on the customer consumption data and information known about the residential receptacle. The method may also include selectively dispatching a vehicle to service the residential receptacle based on the service need.

In yet another aspect, the present disclosure is directed to a non-transitory computer readable medium containing computer-executable programming instructions for performing a method of waste management. The method may include receiving customer consumption data, and referencing a correlation stored in memory to predict an amount of waste material in a residential receptacle based on the customer consumption data. The method may also include anticipating a need to service the residential receptacle based on the amount of waste material and based on at least one of a dimension, a shape, and a volume of the residential receptacle; and selectively dispatching a vehicle to service the residential receptacle based on the service need. The method may additionally include sensing an actual amount of waste material in the residential receptacle during servicing of the residential receptacle, and selectively adjusting the correlation stored in memory based on a difference between the actual amount and the predicted amount.

### Brief Description of the Drawings

Fig. 1 is an perspective illustration of an exemplary disclosed waste management environment;
Fig. 2 is a diagrammatic illustration of an exemplary disclosed system that may be used to manage the environment of Fig. 1; and
Fig. 3 is a flowchart depicting an exemplary disclosed method that may be performed by the system of Fig. 2.

### Detailed Description

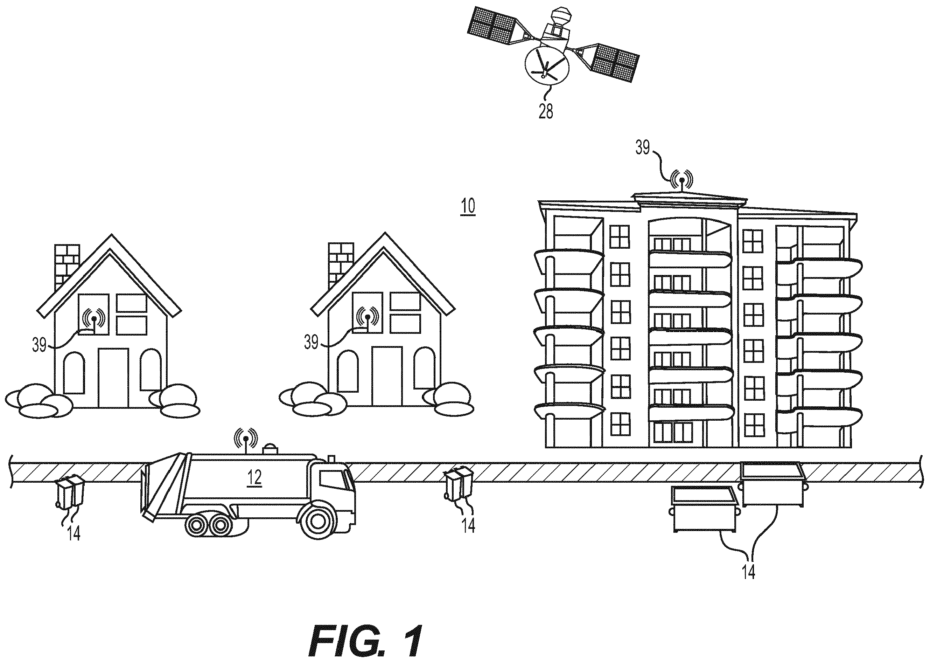

Fig. 1 illustrates an exemplary waste management environment ("environment") 10, at which a vehicle 12 is providing service. Environment 10 may include a house, a townhome, a duplex, an apartment, an apartment building, or another residential location having one or more receptacles 14 that require the service of vehicle 12. The service may include, for example, the removal of waste materials from inside of receptacle(s) 14, the replacement of receptacle(s) 14, and/or the placement of additional receptacles 14.

Vehicle 12 may embody a haul truck (and/or a trailer that is attachable to the haul truck), which includes or otherwise carries a storage compartment for holding waste materials. As is known in the art, the storage compartment may have a rear, side, and/or top hatch for receiving materials from receptacles 14, and the waste materials may be manually, automatically, or semi-automatically loaded into the storage compartment of a particular vehicle 12 via the corresponding hatch. For example, management personnel (not shown) may be able to manually empty receptacles 14 into the storage compartment of a rear-hatch vehicle 12. In another example, vehicles 12 may include mechanical, electrical, and/or hydraulic systems configured to automatically grasp, lift, tilt, shake, and thereby empty receptacles 14 into vehicle 12 via a top-hatch. In yet another example, some tasks (e.g., grasping) may be completed manually and other tasks (e.g., lifting, tilting, and shaking) may be completed with the assistance of the mechanical, electrical, and/or hydraulic systems via a side-hatch of vehicle 12. In a final example, receptacle 14 may simply be loaded (e.g., manually, automatically, or semi-automatically) together with the waste contents onto vehicle 12 and transported away for emptying at another location.

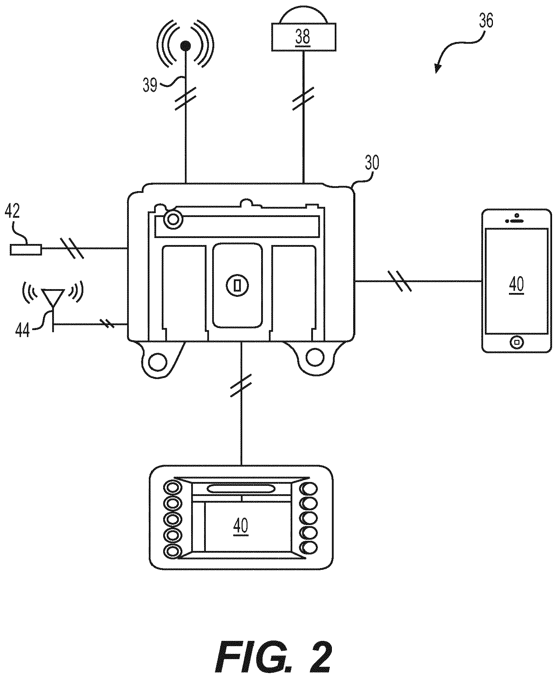

As vehicle 12 moves about environment 10, a satellite 28 or other tracking device may communicate with an onboard controller 30 (shown only in Fig. 2) to monitor the movements of vehicle 12 and the associated changes made to environment 10 (e.g., receptacle pickup, dumping, placement, etc.). As will be explained in more detail below, onboard controller 30, or a separate offboard controller 32 (e.g., a controller 32 located in a back office 34 or other service facility - shown only in Fig. 2), may then manage future operations of vehicle 12 based on these movements and changes.

Both of onboard and offboard controllers 30, 32 may include means for monitoring, recording, storing, indexing, processing, communicating and/or controlling other onboard and/or offboard devices. These means may include, for example, a memory, one or more data storage devices, a central processing unit, or any other components that may be used to run the disclosed application. Furthermore, although aspects of the present disclosure may be described generally as being stored in memory, one skilled in the art will appreciate that these aspects can be stored on or read from different types of computer program products or non-transitory computer-readable media such as computer chips and secondary storage devices, including hard disks, floppy disks, optical media, CD-ROM, or other forms of RAM or ROM.

As shown in Fig. 2, onboard controller 30 may form a portion of a waste management system ("system") 36 that is configured to track, assist, and/or control movements of vehicle(s) 12. In addition to onboard controller 30, system 36 may also include a locating device 38, a source 39 of consumption data, and at least one of an input device 40 and a sensor 42 mounted to or otherwise located onboard each vehicle 12. In some embodiments, system 36 includes both manual input device 40 and one or more sensors 42. Onboard controller 30 may be in communication with each of these other components and/or with offboard controller 32 at back office 34 (e.g., via a communication device 44). Onboard controller 30 may be configured to determine, based on signals from these components and based on other known information stored in memory, the location of each vehicle 12 and characteristics and locations of receptacles 14 being moved by and/or in a vicinity of each vehicle 12. It is contemplated that any two or more of the components of system 36 could be assembled into a single device (e.g., a smartphone, tablet, or vehicle console), as desired. If housed separately, the components of system 36 may be connected via a wireless or wired connection.

Locating device 38 may be configured to generate signals indicative of a geographical position and/or orientation of vehicle 12 relative to a local reference point, a coordinate system associated with environment 10, a coordinate system associated with Earth, or any other type of 2-D or 3-D coordinate system. For example, locating device 38 may embody an electronic receiver configured to communicate with satellites 28 (referring to Fig. 1), or a local radio or laser transmitting system used to determine a relative geographical location of itself. Locating device 38 may receive and analyze high-frequency, low-power radio or laser signals from multiple locations to triangulate a relative 3-D geographical position and/orientation. Based on the signals generated by locating device 38 and based on known kinematics of vehicle 12, onboard controller 30 may be able to determine in real time the position, heading, travel speed, acceleration, and/orientation of vehicle 12. This information may then be used by onboard and/or offboard controllers 30, 32 to update the locations and conditions of vehicles 12 and/or receptacles 14 in an electronic map or database of environment 10.

The data provided by source 39 may be associated with consumption of resources by a particular customer (e.g., the owner, lessee, manager, etc. of the house, townhome, duplex, apartment, or apartment building) who is receiving services from vehicle 12. Consumption data may include, for example, an amount of electrical power, heating fuel (e.g., gas, oil, etc.), water, sewage service, communication service (phone, entertainment, data, etc.), or other utility that is consumed by the customer at a particular location. The consumption data may also or alternatively include an amount and/or type of merchandise (e.g., electronics, books, clothing, groceries, pet supplies, etc.) that enters (e.g., is brought by the customer or delivered by courier, mail, etc. into) the particular location. The consumption data may also include personal information about the consumer, for example, a household income, number of individuals residing at the customer location, ages and genders of the individuals, education levels, birth dates, religions, hobbies, occupations, etc.

Source 39 may be any type of device configured to collect and/or transmit the consumption data described above. In the disclosed embodiment, source 39 is an automated reporting device that is positioned at the customer location and configured to directly measure the consumption of resources by the customer. For example, source 39 could be a power meter, a gas meter, a water meter, a sewer meter, or another type of meter that is configured to directly measure or otherwise monitor resource consumption (e.g., via a corresponding sensor). In this example, source 39 is configured to record and/or transmit signals indicative of resource consumption to onboard and/or offboard controllers 30, 32 (e.g., via a wired or wireless network and communication device 44) for further processing. For instance, source 39 (and communication device 44) may include hardware (e.g., I/O devices, a display, a processor, a memory, etc.) and/or software (e.g., an operating system, communication software, an app, etc.) necessary to facilitate usage monitoring and wireless communication. The communication could be based on one or more wireless proprietary protocol, such as NFC, Bluetooth, Wi-Fi (e.g., 802.11), cellular signals (e.g., GSM, CDMA, and LTE), satellite, etc. It is contemplated that multiple sources 39 could be networked with a single communication device 44 via a hub (e.g., via one of the sources 39 or a dedicated hub). Alternatively, each source 39 could include dedicated components for separate connections with communication device 44, as desired.

In another example, source 39 may be a software program and/or a hardware module made available to the customer (e.g., for use in conjunction with a personal computer) and/or to a retailer that is configured to automatically track in-store and/or online purchases made by the customer. Details about a purchase (e.g., a retailer name and/or location, a type and/or size of a purchased product, packaging details, etc.) may be gathered by the software program in connection with the purchase. The details may be recorded and/or transmitted to onboard and/or offboard controllers 30, 32 (e.g., via a wired or wireless network and communication device 44) for further processing.

In yet another example, source 39 may be a communication connection with a utility provider. In particular, it may be possible for the provider of waste services performed by vehicle 12 to also perform accounting (e.g., billing) for other utility providers. For example, the waste service provider may receive power, communication, and/or sewer usage information from one or more different service providers, and responsively generate a comprehensive bill for each customer that accounts for these different services and also for the waste service performed by vehicle 12. In this example, the communication connection with the other utility providers becomes the source of consumption data 39, and signals indicative of resource consumption may be communicated from these other utility providers to onboard and/or offboard controllers 30, 32 (e.g., via a wired or wireless network and communication device 44) for further processing.

In a final example, the customer themselves may function as source 39 to provide data associated with resource consumption. For example, the customer may provide data (e.g., via a computer, tablet, cellphone) associated with utility consumption, online shopping, and/or the personal information provided above. In some embodiments, incentives (e.g., reduced waste service fees) may be implemented to encourage the customer to provide this information.

As will be described in more detail below, the consumption data provided by source 39 has been found to correlate to a volume of waste generated by a particular customer. For example, a higher-utility consumer generally produces more waste that a lower-utility consumer. Likewise, a higher-income earner and/or a customer within a particular age range (e.g., age 20-30 yrs. old) generally produces more waste than a lower-income earner and/or a customer not within the particular age range. Similarly, more waste is generally produced surrounding a customer's birthday; and waste volume can be directly tied to online shopping details in some situations.

In some embodiments, the correlations between the consumption data and the waste volume may be learned and/or calibrated based on information received from input device(s) 40. In particular, input device 40 may provide a way for an operator of vehicle 12 to input information regarding observances made while servicing a particular customer. For example, the operator may be able to enter a type and/or volume of waste observed at a particular customer location as receptacle 14 is engaged by, dumped into, loaded onto, or otherwise processed by vehicle 12. The information may be input in any number of ways, for example via a cab-mounted touch screen interface, via one or more buttons, via a keyboard, via speech recognition, via a smart phone carried by the operator, or in another manner known in the art. The type and/or volume observations may then be cross-linked to on other information (e.g., to the utility consumption, shopping details, personal information, etc.) known about the customer to help establish and/or adjust the correlations described above.

In the same and/or different embodiments, the correlations between the consumption data and the waste volume may be learned and/or calibrated based alone or further on input received from sensor(s) 42. Specifically, sensors 42 may be configured to monitor parameters associated with the waste material loaded into vehicle 12 and/or the associated receptacles 14 being moved by vehicle 12, and to generate corresponding signals indicative thereof. Each of these sensors 42 may be any type of device known in the art, and located anywhere on vehicle 12. For example, sensor 42 may embody any one or more of a load cell, a force gauge, a pressure sensor, a camera, a RADAR device, a LIDAR device, a microphone, an accelerometer, a gyroscope, or another device configured to generate one or more signals indicative of a type and/or volume of waste dumped from receptacles 14 into vehicle 12. The type and/or volume signals may then be linked to the other information (e.g., the utility consumption, the shopping details, the personal information, etc.) known about the customer to help establish and/or adjust the correlations described above.

Onboard controller 30 may be configured to manage communications between other onboard components and offboard controller 32 located at back office 34. For example, onboard controller 30 may receive signals from locating device 38, input device(s) 40, and sensor(s) 42, and correlate the signals, filter the signals, buffer the signals, record the signals, or otherwise condition the signals before directing the signals offboard via communication device 44.

Communication device 44 may be configured to facilitate communication between onboard controller 30 and offboard controller 32. Communication device 44 may include hardware and/or software that enable the sending and/or receiving of data messages through a communications link. The communications link may include satellite, cellular, infrared, radio, and any other type of wireless communications. Alternatively, the communications link may include electrical, optical, or any other type of wired communications, if desired. In one embodiment, onboard controller 30 may be omitted, and offboard controller 32 may communicate directly with locating device 38, input device(s) 40, and/or sensor(s) 42 via communication device 44, if desired. Other means of communication may also be possible.

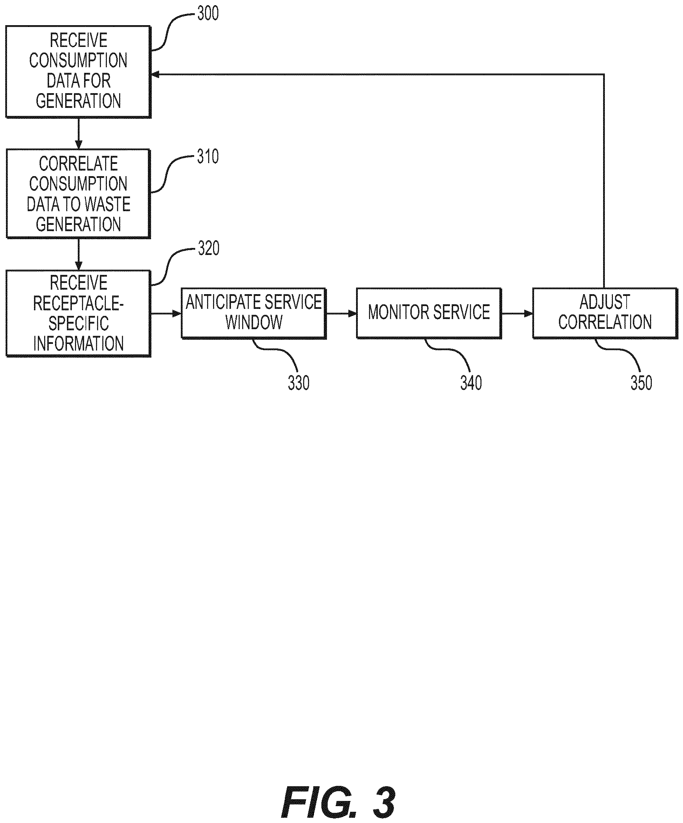

Onboard and/or offboard controllers 30, 32, based on the information received from onboard vehicles 12 and also based on the consumption data received from source(s) 39, may be configured to execute instructions stored on computer readable medium to perform methods of waste management at environment 10. For example, onboard and/or offboard controllers 30, 32 may be configured to predict a service window for a particular customer (e.g., a window of time within which the associated receptacle 14 should be serviced) and/or a required service (e.g., an amount of waste that should deposited within receptacle 14 by the time service is performed). This process is illustrated in Fig. 3, and will be explained in more detail in the following section to further illustrate the disclosed concepts.

### Industrial Applicability

The disclosed system may be applicable to the waste service industry, where numerous waste receptacles 14 are distributed across multiple residential locations, each having varying service requirements. The disclosed system may consider receptacle-specific information and consumption data for each customer in order to anticipate future needs of the different customers. Operation of system 36 will now be described with reference to Fig. 3.

As shown in Fig. 3, operation of system 36 may begin with onboard and/or offboard controllers 30, 32 receiving consumption data for a particular customer (Step 300). The consumption data may vary and is not necessarily linked to a particular receptacle 14. In other words, the consumption data may be generally externally obtained relative to receptacle 14 (e.g., from source 39). As described above, the consumption data could include utility-use, online and/or in-store shopping details, and/or personal information. In some embodiments, the consumption data could also include local or regional information of the area surrounding the customer location (e.g., a calendar of holidays, weather conditions, traffic or road conditions, seasonal changes, local events, etc.). The consumption data may be entered continuously or periodically.

Based on the consumption data received at step 300 for a particular customer, onboard and/or offboard controllers 30, 32 may be configured to correlate the consumption data to an anticipated volume of waste generated by that particular customer (Step 310). The correlation may be made by reference to one or more maps stored in memory. Each map may include, for example, a table, an algorithm, an equation, a graph, or another type of relationship. For example, one or more types of consumption data (e.g., gender, age, income level, time of year, geographical location, online shopping, and electrical power bill) may be used as weighted variables in a multi-variable equation to predict the volume of waste generated by a particular customer within a particular time frame.

At some point during completion of the method depicted in Fig. 3 (e.g., before, simultaneous with, or after completion of steps 300 and 310), onboard and/or offboard controllers 30, 32 may also receive receptacle-specific information for a particular customer (Step 320). The receptacle-specific information may relate to the particular receptacle 14 placed at a particular customer location and remains true, regardless of external conditions. This information may include, for example, a dimension, shape, and/or volume of receptacle 14. The receptacle-specific information may be manually entered information (e.g., information entered from onboard vehicle 12 via input device(s) 40 and/or entered at back office 34, information that is uploaded by a customer, etc.) or information that is automatically entered (e.g., information obtained via onboard sensor(s) 42) during servicing of receptacle 14. The information may be entered continuously or periodically.

Based on the consumption data and the receptacle-specific information received at steps 300 and 320, respectively, onboard and/or offboard controllers 30, 32 may be configured to automatically determine a service window in which a particular receptacle 14 will likely require servicing (Step 330). In particular, onboard and/or offboard controllers 30, 32 may compare the receptacle-specific information (e.g., size, shape, and/or volume of receptacle 14) with the predicted waste volume at the corresponding customer location in order to anticipate a date/time when that receptacle 14 should be filled and ready for service by vehicle 12.

For example, a particular receptacle 14 at a particular customer location may normally fill at a rate of about 15% per day. Based on this information alone, onboard and/or offboard controllers 30, 32 may anticipate a need for the particular receptacle to be emptied about once per week. However, this service frequency may need to increase or decrease based on external factors that cannot be controlled, in order for customer expectations to be satisfied. For example, based on the known birthday of a customer and/or based on online shopping information for a period of time just prior to the birthday, the volume of waste produced by the customer on or just after the birthday may be predicted to increase (e.g., to accommodate packaging of birthday-related merchandise). In another example, based on a period of low-utility use (e.g., due to a customer being on vacation), the volume of waste produced by the customer may be predicted to decrease. Onboard and/or offboard controllers 30, 32 may be configured to determine the influence of the consumption data on waste generation, and to responsively adjust the forecast of service frequency for the corresponding receptacle 14.

As service of the particular receptacle 14 is being performed, feedback associated with the service may be provided for use in tuning the map(s) discussed above, billing the customer, and/or making adjustments to future window conditions (Step 340). This feedback may come from multiple sources. In the disclosed embodiment, real-time feedback is received by onboard and/or offboard controllers 30, 32 (e.g., via locating device 38, input devices 40, and/or sensors 42). For example, as vehicle 12 approaches the particular receptacle 14, the location of vehicle 12 may be tracked via locating device 38 and compared to the known address of a particular customer. In addition, as receptacle 14 is lifted, tilted, shaken, set down, etc., sensors 42 may generate signals indicative of the engagement, a receptacle weight, a waste volume, completion of a dumping maneuver, an increase in vehicle payload, etc. Sensors 42 may also be able to capture images of the waste that can be used to later identify the waste (e.g., packaging from particular merchandise, a retailer of the corresponding merchandise, an online shopping session during which the merchandise was purchased, etc.).

Onboard and/or offboard controllers 30, 32 may then use the feedback information generated from onboard vehicle 12 during servicing to adjust the correlation between consumption and waste generation (e.g., to adjust the map(s) stored in memory - Step 350), and also to confirm that servicing of the particular receptacle 14 was performed. For example, based on a difference between the anticipated fill amount of receptacle 14 and an actual fill amount (an amount determined based on the weight or volume measured via sensor 42) determined at a time of servicing, the map(s) used to anticipate waste generation may be tuned to decrease the difference in future service events. For example, weightings used in the multi-variable equation to adjust the influence of gender, age, income level, time of year, geographical location, online shopping, and electrical power bill, may be adjusted. In addition, based on the tracked location of vehicle 12, the increase in vehicle payload, etc., onboard and/or offboard controllers 30, 32 may conclude that the particular receptacle 14 was properly serviced according to the required window of conditions. Onboard and/or offboard controllers 30, 32 may then use this confirmation as a basis for reporting the service to the customer, billing for the service, etc.

The disclosed system may provide a number of benefits. For example, because only vehicles 12 (and not receptacles 14) may be equipped with sensors 42, a cost of system 36 and associated maintenance requirements may be low. In addition, system 36 may consider the primary factors affecting the fill rate of residential-type receptacles 14, thereby providing improved accuracy in the service need predictions of these receptacles 14. Further, system 36 may be applicable to any type of waste receptacles 14, regardless of a receptacle configuration.

It will be apparent to those skilled in the art that various modifications and variations can be made to the disclosed system. Other embodiments will be apparent to those skilled in the art from consideration of the specification and practice of the disclosed system. It is intended that the specification and examples be considered as exemplary only, with a true scope being indicated by the following claims and their equivalents.

## Claims

1. A management system for use with a vehicle configured to receive waste from a residential receptacle, the management system comprising:
a source of customer consumption data, optionally including at least one of a metering device, a shopping tracker, and a communication connection with a utility provider;
a communication device; and
a controller in communication with the source and the communication device, the controller being configured to:
utilize a correlation stored in memory to anticipate a service need of the residential receptacle based on the customer consumption data and information known about the residential receptacle; and
via the communication device, selectively dispatch the vehicle based on the service need.

2. The management system of claim 1, further including an onboard device configured to generate feedback associated with servicing of the residential receptacle, wherein the controller is further configured to selectively adjust the correlation stored in memory based on the feedback.

3. The management system of claim 2, wherein the feedback includes an actual amount of waste material in the residential receptacle.

4. The management system of claim 2 or 3, wherein the onboard device includes at least one of a manual input device and a sensor.

5. The management system of claim 4, wherein the sensor is configured to generate one or more signals indicative of at least one of a type and a volume of waste in the residential receptacle.

6. The management system of claim 5, wherein the sensor is one of a load cell, a force gauge, a pressure sensor, a camera, a RADAR device, a LIDAR device, a microphone, an accelerometer, or a gyroscope.

7. The management system of any preceding claim, wherein the customer consumption data includes at least one of an amount of electrical power, heating fuel, water, sewage service, or communication service that is consumed by a customer associated with the residential receptacle; an amount of merchandise and a type of merchandise that enters a particular location at which the residential receptacle is positioned; and a household income associated with a particular location at which the residential receptacle is positioned, a number of individuals residing at the particular location, ages of the individuals, genders of the individuals, education levels of the individuals, birthdays of the individuals, religions of the individuals, hobbies of the individuals, and occupations of the individuals.

8. The management system of any preceding claim, wherein the controller is configured to:
predict an amount of waste generated by a customer based on the customer consumption data; and
anticipate the service need of the residential receptacle based on the amount of waste.

9. The management system of any preceding claim, wherein the information known about the residential receptacle includes at least one of a dimension, a shape, and a volume of the residential receptacle.

10. A method of managing waste services, including:
receiving customer consumption data;
anticipating a need to service a residential receptacle based on the customer consumption data and information known about the residential receptacle; and
selectively dispatching a vehicle to service the residential receptacle based on the service need.

11. The method of claim 10, wherein:
anticipating the need to service the residential receptacle includes referencing a correlation stored in memory to predict an amount of waste material in the residential receptacle based on the customer consumption data; and
the method further includes:
generating feedback from onboard the vehicle in association with servicing of the residential receptacle, optionally wherein the feedback includes an actual amount of waste material in the residential receptacle; and
selectively adjusting the correlation stored in memory based on the feedback.

12. The method of claim 11, wherein generating the feedback includes at least one of receiving manual input device and sensing the actual amount of waste material with a sensor.

13. The method of any of claims 10 - 12, wherein the customer consumption data includes at least one of an amount of electrical power, heating fuel, water, sewage service, or communication service that is consumed by a customer associated with the residential receptacle, an amount of merchandise and a type of merchandise that enters a particular location at which the residential receptacle is positioned, a household income associated with a particular location at which the residential receptacle is positioned, a number of individuals residing at the particular location, ages of the individuals, genders of the individuals, education levels of the individuals, birthdays of the individuals, religions of the individuals, hobbies of the individuals, and occupations of the individuals.

14. The method of any of claims 10-13, wherein the information known about the residential receptacle includes at least one of a dimension, a shape, and a volume of the residential receptacle.

15. A non-transitory computer readable medium containing computer-executable programming instructions for performing a method of waste management as recited in any of claims 10-14.
